# EUROPEAN PATENT SPECIFICATION

(11) **EP 2 419 277 B1**
(45) Date of publication and mention of the grant of the patent: **10.01.2018**
(21) Application number: 10716596.1
(22) Date of filing: 13.04.2010
(51) Int. Cl.: B42D 25/324, B42D 25/20, B42D 25/36, G02B 1/00, F16L 59/02

(54) **SECURITY DOCUMENT**
SICHERHEITSDOKUMENT
DOCUMENT DE SÉCURITÉ

(30) Priority: 14.04.2009 GB 0906367
(43) Date of publication of application: 22.02.2012
(73) Proprietor: De La Rue International Limited, Basingstoke Hampshire RG22 4BS (GB)
(72) Inventor: WHITEMAN, Robert, Berkshire RG4 7ST (GB); EASTELL, Christopher, John, Swindon SN4 0TN (GB); KNIGHT, Malcolm, Robert, Murray, Hampshire RG25 2BP (GB)
(74) Representative: Gill Jennings & Every LLP
(86) International application number: PCT/GB2010/000747
(87) International publication number: WO 2010/119248

(56) References cited:
- EP-A1- 2 003 623
- WO-A1-2008/017869
- WO-A1-2008/031170
- DE-A1- 10 004 113
- DE-A1-102006 051 524

## Description

### Field of the Invention

The present invention relates to improvements in security documents and in particular to such documents incorporating piezochromic materials as security features.

### Background to the Invention

Security documents such as banknotes now frequently carry optically variable devices that exhibit an angularly dependent coloured reflection. This has been motivated by the progress in the fields of computer-based desktop publishing and scanning, which renders conventional security print technologies such as intaglio and offset printing more prone to attempts to replicate or mimic. It is well known in the prior art to use liquid crystal materials or thin film interference structures to generate such angularly dependent coloured reflection. Examples of liquid crystal based security devices are described in EP0435029, WO03061980, and EP1156934 and examples of security devices utilising thin film interference structures are described in US4186943 and US20050029800.

The planar nature of liquid crystal films and thin film interference structures results in the observed angularly dependent coloured reflection exhibiting limited spatial variation for example a simple red to green colour change on tilting the security device away from normal incidence.

Photonic crystals are structured optical materials in which the refractive index varies periodically in two or preferably three dimensions. These materials exhibit a range of interesting optical effects when subject to electromagnetic radiation of a wavelength comparable to the spatial modulation of the refractive index. Bragg reflection may occur over a range of wavelengths that depend on the direction of incidence/propagation and the periodicity of refractive index variation. This gives rise to photonic 'energy gaps' that are analogous to the electronic band gaps in semiconductors. Typically, electromagnetic waves within a certain frequency range cannot propagate in particular directions within the crystal, and incident electromagnetic radiation at these wavelengths is consequently reflected. It is the presence of such partial photonic band gaps that gives rise to the shimmering colours observed in opal gemstones.

In general there is a complex dependence on the wavelength, direction of propagation and polarisation that dictates which electromagnetic waves may propagate within the photonic crystal and those that are otherwise reflected. However, if the modulation in refractive index is sufficiently strong, propagation of certain frequencies can be forbidden for any crystalline direction, and a complete photonic band gap arises. In this case light is prevented from propagating within the crystal in any direction, and the material acts as an ideal reflector such that all light of a wavelength within the band gap range is perfectly reflected irrespective of the incident direction.

There exists two well-documented methods of fabricating structures with the necessary highly ordered variation in refractive index - microfabrication and self-assembly. Due to the complexity of microfabrication considerable effort has been devoted to investigating self-assembling systems comprised of submicron three-dimensional arrays of dielectric spheres. Such photonic crystals are formed by allowing a colloidal suspension of identically sized spheres to settle slowly under the influence of gravity or by the application of an external force such that the spheres are encouraged to order. One example is the fabrication of synthetic opal structures where uniformly sized sub-micron silica spheres are organised through a sedimentation process into a face-centred cubic crystal structure.

Further enhancements to this technique have been developed such that the synthetic opal acts as a precursor or template to further customise the structure. It has been shown that it is possible to use such systems as templates to realise materials known as inverse or inverted opals. Here, the regions between the silica spheres are first filled with a suitable matrix material, and the silica is then dissolved by chemical means to give a system that consists of an array of air spheres or voids surrounded by a uniform matrix.

The optical properties of photonic crystals can be engineered and varied to a greater extent than the optical properties of planar liquid crystal and thin film interference devices. Firstly the angular and wavelength dependence of the reflected light can be more easily controlled by varying the crystal lattice structure by either simply adjusting the sphere size, or the sphere separation. Similarly, selected allowed and disallowed reflections/transmissions may be engineered or enhanced by introducing structural defects into the lattice or by introducing nanoparticles into the structure. This in principle gives freedom to modify and engineer the band structure and hence the wavelength and spatial dependence of the reflectivity.

The use of photonic crystals in security devices is known from the prior art and examples include WO03062900, US20050228072 WO2008017869, WO2008017864, WO2008098339 and EP1972463. EP2003623 discloses a layer of sensor polymer which is used to cover a security feature. Stimulus of the sensor polymer causes a change between opaque and transparent states. In WO2008031170 a security element and a security feature are located at laterally space locations and then superimposed by folding, such that the security feature is viewed through the security element to change its appearance.

Furthermore the interactive nature of such materials has been documented in a paper "Interactive Elastic Photonic Crystals", A.C. Arsenault et al, presented at the conference "Optical Document Security", San Francisco, 23-25 January 2008. The challenge for the use of photonic crystals in security devices is how to incorporate such devices into security documents such that the additional optical effects possible from photonic crystals, compared to other well known dichroic materials, can be used to validate the document. The object of the current invention is to improve the security of the devices described in the prior art and provide a practical solution to the problem of how to use these and other similar materials as authenticating devices.

### Summary of the Invention

In accordance with the invention we provide a security document in accordance with claim 1 of the appended claims.

The present invention provides a two-part self-authenticating security device in a document, in which an optical effect is generated in a piezochromic material by pressing it against a contact structure positioned in a different part of the document to the region of piezochromic material.

A piezochromic material is here defined as any material that changes colour on the application of a deformation. Much of the discussion herein is focussed upon photonic crystals as examples of piezochromic materials. One class of alternative piezochromic materials to photonic crystal materials is liquid crystal materials. French patent application FR2698390 provides examples of cholesteric and nematic liquid crystal materials that change colour under the application of a pressure. Alternatively it is also known that in lyotropic liquid crystal materials it is possible to produce colour changes by the application of pressure to disturb the layers of crystals and thereby alter their transmission characteristics.

The contact structure can be formed by a number of different processes and typically exhibits relief as a raised or textured surface. This may be formed by a printing process such as with intaglio printing, or by embossing. Furthermore, a relatively hard material having a relief profile may simply be mounted to the document. In a further example, a watermark can be used as the contact structure. Watermarks in fibrous substrates exhibit a variation in relief due to the variation in the number of fibres present in different regions of the watermark. We have found that although the relief in a conventional multitonal banknote watermark cannot be felt by touch the relief caused by the variation in fibre volume are sufficient to generate an optical effect in a photonic crystal. A watermark therefore may act as a contact structure in that the change in relief is as a result of the difference in the number of fibres across the watermark. This is different from an intaglio embossed structure where the thickness of the substrate actual remains substantially constant but its position is caused to be modulated with respect to a line defining a plane prior to the embossing being performed. The variation in the number of fibres provides the watermark with a variable optical density enabling the pattern to be viewed in transmitted light unlike a conventional blind embossed structure (one without inking) which is not viewable in transmitted light.

It will also be appreciated that in some cases the relief may be caused by a local reduction in the surface height (analogous to electrotype watermarks) and therefore below the height of the surrounding material. However, the presence of projecting regions (of a height in excess of the surrounding material) may be more convenient to fabricate.

The optical effect may comprise a first optical effect in a region of deformation of the photonic crystal and a second optical effect in a region which is not deformed. One or each may be optically variable effects. The optical effect may therefore represent a change in colour. The term "colour" is intended to include white/mirrored (essentially reflecting at all relevant wavelengths), black (essentially absorbing at all relevant wavelengths) and wavelengths outside the human-visible range. Typically the colour is a human-visible colour The optical effect also may represent a change to or from complete reflection regardless of wavelength. Furthermore, one or each optical effect may be invisible to the human eye and therefore may exhibit their effects in the ultra-violet or infra-red regions of the electromagnetic spectrum. In general the optical effect is representative of the relief of the contact structure although this is not essential. Thus if the relief is formed as an image, then the optical effect in the photonic crystal may be a similar or complementary image. Thus the optical effect may reproduce the image. If the relief within the contact structure is on a fine scale then the optical effect may simply represent more general features of the relief such as its lateral scale or regions in which the relief height changes most severely.

Preferably, at least part of the document is arranged to be flexible so as to allow the first and second parts to be brought together. Indeed the entire document may be formed from a flexible substrate. It is contemplated that parts of the document may also be relatively inflexible and therefore a hinge or fold may be provided to aid in bringing the first and second parts together.

Whilst the first and second parts may be in the material of the document itself, typically the first and second parts comprise respective first and second surfaces of the document, these being a common surface in some cases.

One or each of security device and contact structure may comprise a cover layer, which is typically a thin layer and which may serve to protect the material beneath.

With or without presence of the cover layer, the action of the pressing together of the region of piezochromic material and the contact structure typically causes a temporary distortion within the structure of the piezochromic material. Such a distortion may last for a fraction of a second upon removal of the applied stress, or may last for minutes or even hours.

The security device may further comprise an absorbing layer mounted to the region of piezochromic material. This may act as the cover layer. The absorbing layer is therefore typically dark in appearance. It is preferably a non-selectively absorbing material. It may be a pigmented ink or a non-pigmented absorbing dye. Instead of, or in addition to the absorbing layer, the structure of the piezochromic material itself may be provided with absorbing regions which, like the absorbing layer, increase the contrast of any optical effect observable.

In an alternative embodiment the contact structure itself can act as the absorbing layer (by containing an absorbing phase) for example the contact structure may take the form of a darkly coloured raised intaglio printed image. Regardless of the contact structure used, the security device may further comprise a printed ink layer having a colour which is substantially the same as at least one of: the colour of the relief structure, the colour of light reflected from the piezochromic material when in a stressed state or the colour of light reflected from the piezochromic material when in an unstressed state.

Two or more contact structures may be provided and they may be used together to generate an image as part of the optical effect. For example a first part of a composite image may be represented in a first of the plurality of contact structures and a second part of the composite image may be represented in a second of the plurality of contact structures. The first and second image parts may form a resultant image when combined. If each contact structure is positioned to cause corresponding deformation of the piezochromic material during compression then the resultant image may be visible when the device is compressed. Notably the contact structures may be positioned upon opposing sides of the document. One such structure may also be formed as part of the region of piezochromic material or attached thereto.

A number of different types of photonic crystal may be used to implement the invention as piezochromic materials. They may include nanoparticles distributed homogeneously, inhomogeneously in regions, or as a concentration gradient.

The region of piezochromic material may be provided in a number of forms, for example as a self-supporting layer. Alternatively, it may be supported by a substrate or carrier layer to which it is mounted directly or indirectly (through one or more further layers). The substrate or the carrier layer may take the form of a polymeric layer. The piezochromic material may also take the form of a pigmented coating or layer where the piezochromic material is in the form of a pigment.

It is also preferred that the device is arranged to be machine-readable. This may be achieved in a number of ways. For example the change in wavelength of the reflected light with change in direction of incident light could be used for machine authentication. In a further example at least one layer of the device (optionally as a separate layer) or the region of piezochromic material itself may further comprise machine-readable material. Preferably the machine-readable material is a magnetic material, such as magnetite. The machine-readable material may be responsive to an external stimulus. Furthermore, when the machine-readable material is formed into a layer, this layer may be transparent.

The region of piezochromic material may be located within the document such that it has a first face on a first side of the document and a second face on an opposing side of the document. Thus the region of piezochromic material may adopt a through-thickness arrangement. The region of piezochromic material may be mounted to a window in the document or may actually function as the window.

Thus it is preferred that the region of piezochromic material is formed as a film for use in the security document. The security documents include banknotes, cheques, passports, identity cards, certificates of authenticity, fiscal stamps and other documents for securing value or personal identity.

The security device may take various different forms for use with security documents, these including a security thread, a security fibre, a security patch, a security strip, a security stripe, a security foil or a security coating or printed layer as non-limiting examples.

When a photonic crystal material is used, this may be based on an inverse opal structure or an opal structure. The 'sponge-like' nature of the inverse opal structure allows it to be more readily compressed and therefore more suitable for the current invention. Compressing such a material distorts the periodicity of the structure and consequently can affect a change in the visual appearance. This may be assisted by the use of an elastomeric matrix material, which naturally gives a more flexible system.

Suitable materials for use in inverse opal structures are disclosed in WO2008098339. The inverse opal film can be generated using a template, in one example the template is formed by using self-assembly techniques to order spheres on a glass substrate. The spheres may be inorganic for example silica or polymeric for example polystyrene. The voids between the spheres are then filled with a polymer material. Examples of suitable polymer materials are listed in WO2008098339 and include a monomer or pre- polymer selected from the group consisting of methacrylic acid esters, acrylic acid esters, polyisoprene, polybutadiene, polyurethane precursors, crosslinkable polyethers, and mixtures thereof. The spheres are then removed by an appropriate etchant or solvent depending on the type of sphere material used. In the case of polystyrene the spheres are dissolved by an appropriate solvent to give a system that consists of an array of air spheres or voids surrounded by a uniform matrix. More information on the selection of an appropriate solvent to dissolve polymer microspheres can be found in "An Introduction to Polymer Colloids", 1st Edition, published by Springer in December 1989.

If the inverse opal structures are to be used as a pigment in a coating or printing ink then the film can be converted into a pigment for example by detaching the film from the substrate and breaking the film up to the desired particle size.

The photonic crystal security device may also contain regions comprising both standard opal structures and inverse opal structures. Both structures exhibit the phenomenon known as structural colour whereby their visual appearance is a function of their configuration; in particular the arrangement, size and refractive index (relative to the matrix) of the spheres or voids.

The regions composed of an inverse structure will show greater optical variability as a function of deformation compared to those composed of a standard opal-like structure. This may be assisted by the use of an elastomeric matrix material, which naturally gives a more flexible system.

One further advantage of such a feature is the possibility of deriving one region (the inverse opal) from the other (the opal). This will involve post-processing a continuous opal-like structure, for example using the techniques discussed earlier, to convert a selected region to an inverse opal-like structure. In other words, a security device could be made by 'patterning' and converting regions of standard opal-like structure to ultimately give two types of crystal structure.

In practice, most inverse opal-like structures are achieved by first fabricating a standard opal and then selectively removing the submicron spheres by a selective etching process that leaves the matrix material unaffected. If a security device were made form a suitable material system it would be possible to etch out the spheres in chosen regions whilst leaving other areas unaltered. The resultant feature would have a continuous matrix. For example one way of producing such a device would be to follow the method described above for the inverse opal structure but then only dissolve the spheres in localised regions to give a material that in a first region consists of air spheres separated by a uniform matrix of the polymeric material and in a second region consists of polystyrene spheres surrounded by the uniform matrix of the polymeric material.

### Brief Description of the Drawings

Some examples of a document according to the invention are now described, with reference to the accompanying drawings, in which:-
Figure 1 is a side view of a first example document;
Figure 2 is a plan view of the first example;
Figure 3 is a side view showing the document when folded;
Figure 4 illustrates the image generated within the photonic crystal;
Figure 5 shows a second example, partly in section, in an open configuration; and,
Figure 6 shows the second example in a partially closed configuration.

### Description of Examples

In the example described below a security document in the form of a banknote is provided with a "self-authenticating" security feature using the combination of a contact structure and a photonic crystal.

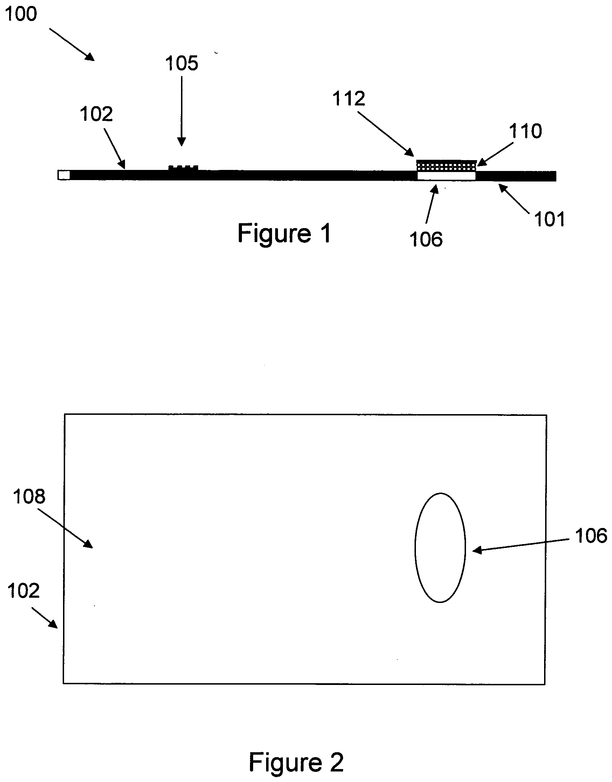

Referring to Figure 1, the banknote is illustrated at 100 and in this example is formed from a paper-based material which acts as a substrate 101. Conventional materials can be used to produce the substrate 101, including plastics materials. The banknote 100 is generally flexible due to the material from which it is made, and it being arranged to have a thin cross section. This allows the banknote 100 to be folded repeatedly. The banknote 100 should be understood to contain a number of optional security features including security threads, specialised printing inks and techniques and so on. These are not illustrated in Figure 1 for simplicity of explanation only. A first face 102 is shown facing towards the top of Figure 1. At a position approximately one quarter of the way along the length of the banknote 100 from one edge and on the first face, an area of intaglio printing is located forming a contact structure 105. As will be appreciated by those in the art, a feature of intaglio printing is that can be used to produce an area of printing ink positioned upon the substrate, the area printed having an ink height of typically 5 to 50 micrometres above the surrounding substrate surface. The intaglio printing may take the form of an image and may be printed using opaque or transparent inks. In the present case an opaque ink is used. The intaglio printing forming the contact structure on the face 102 of the banknote 100 provides a localised area of surface relief.

An optical window 106 is located at a position approximately three quarters of the distance along the length of the banknote 100. The window 106 is formed from a transparent plastics material and is integral with the banknote substrate 101. Windows in banknotes are known in the art and typically allow an observer to look through the banknote, as a security feature. For example, WO8300659 describes a polymer banknote formed from a transparent substrate comprising an opacifying coating on both sides of the substrate. The opacifying coating is omitted in localised regions on both sides of the substrate to form a transparent region. EP1141480 describes a method of making a transparent region in a paper substrate. Other methods for forming transparent regions in paper substrates are described in EP0723501, EP0724519, EP1398174 and WO03054297. The opposing side of the banknote 100 forms a second face 108. Figure 2 shows the second face of the banknote 100 when viewed in plan. The window can be seen to take the form of an ellipse although other shapes are of course contemplated.

Referring once more to Figure 1, a photonic crystal 110 (which is a piezochromic material) is bonded to the surface of the window 106 on the first face 102 side of the banknote 100. The photonic crystal 110 takes the form of a film of a thickness of under 200 micrometres, preferably less than 50 micrometres and even more preferably less than 30 micrometres. The use of a film is advantageous in that, since it is thin, it is relatively easy to distort the photonic structure and therefore to produce an optical effect. A further discussion of suitable materials can be found in a paper "Interactive Elastic Photonic Crystals", A.C. Arsenault et al, presented at the conference "Optical Document Security", San Francisco, 23-25 January 2008. In a further example the photonic crystal can be applied as a coating or printing over the window 106.

The outer surface of the photonic crystal film 110 is covered by an absorbing layer 112. In the present case this is a non-selectively reflecting ink and is therefore of very dark appearance. This layer 112 is thin so as to maximize the optical effect which results within the crystal. The absorbing layer serves a dual function. Firstly, it assists in providing contrast to ease in the observation of any optical effect within the photonic crystal film 110. Secondly, the absorbing layer 112 acts to an extent as a protective coating.

Because the use of a covering absorbing layer may not be aesthetically pleasing or compatible with the design of the banknote and in an alternative embodiment the intaglio printed image can itself act as the absorbing layer and this is achieved by using a darkly coloured intaglio image.

The self-authenticating security feature of the present example is provided by the combination of the contact structure 105 and the photonic crystal film 110.

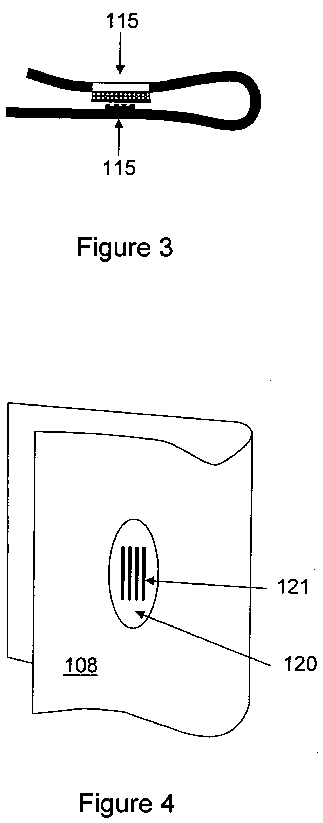

Figure 3 shows how the flexibility of the substrate allows the region of the banknote 100 containing the window and photonic crystal layer to be folded onto the intaglio print of the contact structure 105. Once in the position shown in Figure 3, the absorbing layer 112 and photonic crystal film 110 can be pressed against the surface relief of the intaglio print of the contact structure 105. The compression force, which is experienced by these components as a compressive stress, is illustrated by the arrows 115.

The intaglio print is therefore forced into the absorbing layer 112 which deforms. Additionally the photonic crystal film beneath the absorbing layer is also deformed, this causing a change in the optical properties of the photonic crystal layer in the deformed regions when compared with the non-deformed regions of the crystal. The regions of deformation conform to the surface relief of the intaglio print.

Upon releasing the compressive force and separating the absorbing layer 112 from the intaglio print, the photonic crystal film may or may not return to its former undistorted configuration. This is dependent upon the material used to form the photonic crystal film. Furthermore, the speed of any relaxation to its original configuration is also a function of the material.

In any deformed region the deformation of the photonic crystal causes a local optical effect which is different to the optical effect present in a non-deformed region. One or each of these optical effects may be an optically variable effect such as a colour shift, or may be an effect such as total reflection at all wavelengths.

In the present case by way of example, the non-deformed region might exhibit a red colour effect, whereas that of the deformed region might exhibit a green effect, each according to white light illumination. These effects are reflective effects and are observable through the window 106 when the second face 108 of the banknote 100 is illuminated. The absorbing layer 112 provides a black backing to enhance the visible effect of the photonic crystal film. In the regions where the intaglio print image is imprinted into the photonic crystal film, causing local distortion, the image becomes visible as a green image through the window 106 due to the contrast between the deformed and non-deformed regions.

An example of this is illustrated in Figure 4, where a non-deformed region 120 of the photonic crystal film provides a plain background to the image of the intaglio print formed in the photonic crystal as shown at 121.

A strong optical contrast is generated when the folded surfaces are pressed between two hard planar surfaces such as two glass plates. If a material with a long relaxation time (the time to return to an non-deformed state) is chosen, such as a time of several seconds to a few minutes, then the glass plates can be removed and the image in the photonic crystal film viewed through the window 106. However, if a short relaxation time typically one second or less is chosen, then the image 121 may only be visible through the glass plate which contacts the window 106 on the second face 102 whilst the pressure is applied.

In summary of the above example the security feature is authenticated by folding the note over and pressing the photonic crystal against an area on the banknote that has a raised or textured surface. If very short relaxation times are used then the viewing window should be placed against a rigid clear surface to facilitate applying pressure from the rear of the note. One practical/manufacturing advantage of the having a self authentication structure is that it can avoid the problems associated with adhering the photonic crystal to an uneven surface. Durability is consequently better and the longevity is improved.

The example described above is viewed primarily in reflection. The optical effects of the photonic crystal material are best visualised against the dark non-selectively absorbing background provided by the absorbing layer 112 under the photonic crystal layer.

In the alternative embodiment where there is no additional dark absorbing film but the intaglio printed image is in a dark absorbing colour then the film in its uncompressed state will be uniformly opalescent but on pressing the photonic crystal film against the intaglio surface the areas in contact with the dark intaglio print will appear in a different colour to the background regions not in contact with the background print and furthermore the contrast between the two regions will be striking due to the increased intensity of the compressed region resulting from the fact that it is now being observed against an absorbing background layer.

A similar result to the presence of an absorbing layer may be achieved by the introduction of absorbing particles into the photonic crystal material. If using absorbing particles, the absorbing particles should be significantly greater than the size of the spheres of the photonic lattice such that they do not cause a change in the lattice and consequently an undesirable change in the optical properties.

Whilst the use of a black, or very dark, substantially totally absorbing layer may give rise to the most strong colourshifts, other effects may be generated by the use of a partially absorbing layer of other colours or a combination of colours, giving rise to differing apparent colourshift colours. If the absorbing layer is present, this may be overprinted or coated with an effect ink to make it more aesthetically pleasing when viewed from the first face 102.

The optical properties of the photonic crystal may also be additionally or alternatively further modified or enhanced by the use of nanoparticles positioned within the crystal structure, preferably at interstitial sites. The nanoparticles may be distributed substantially uniformly through the crystal such that each part of the crystal exhibits substantially the same optical effect. Alternatively the nanoparticles may be distributed inhomogeneously through the crystal such that different parts of the crystal exhibit a substantially different optical effect. Thus the nanoparticles may be distributed according to a concentration gradient. The nanoparticles may also be distributed in a number of regions having different concentrations.

A particularly advantageous feature of the current invention is that the compressible photonic crystal film can be used to reveal hidden images on a secure document having contact structures created by blind embossing or raised transparent inks. In a further example it would be possible to have areas of transparent raised image printed over a substantially planar coloured area. The coloured area (preferably printed by litho-printing) acts to obscure the presence of the raised image, but when the photonic crystal is pressed against that area the surface relief is revealed in the photonic crystal. Preferably the substantially planar coloured area will be darkly coloured and can therefore also function as the absorbing layer.

In the banknote example given above the photonic crystal film undergoes a colour change and therefore a visible-to-visible transition. Other contemplated examples include a switch from one visible colour to another on deformation, a switch from invisible to coloured or from reflecting UV to being transparent to UV such that on being distorted a UV feature may be activated underneath the photonic crystal film.

Ideally, this feature would work best with an inverse opal photonic crystal structure, which are known from WO2008098339. However, a noticeable effect may be achieved with a standard opal structure (such as described in US20040131799, US20050228072, US20040253443 and US6337131) if sufficient lattice distortion can be achieved, or if deformable spheres are used.

In addition to using an image which is raised above the surface such as an embossing or intaglio printed image it has also been realised that a watermark produces a similar effect when a suitable photonic crystal film is pressed against it.

The use of watermarks is fairly common in many security documents. High security multi-tonal watermarks are typically created using a cylinder mould process and are formed by varying the volume of paper fibres so that in some regions the volume of fibres increases, and in others decreases relative to that of the base paper layer which surrounds the watermark region. When viewed in transmitted light the regions with few fibres are lighter and the regions with increased fibres are darker than the base paper, and the contrasts can be seen very clearly. Different types of watermarks have different advantages. A multi-tonal watermark is often a pictorial image, such as a portrait, and can be very detailed and complex which significantly reduces the risk of counterfeiting.

In cylinder-mould papermaking, paper is formed on a partially submerged wire-cloth covered mould cylinder, which rotates in a vat containing a dilute suspension of paper fibres. As the mould cylinder rotates, water is drawn through the wire cloth depositing fibres onto the cylinder surface. When the wire cloth is embossed with a detailed image, the fibres deposit with a lesser or greater thickness on the raised and sunken elements of the embossing to form a fully three-dimensional watermark in the finished paper.

The variation in paper thickness in the final watermark is a result of fibre movement from the raised regions of the embossed mesh to the sunken regions of the embossed mesh as the water is drawn through the wire cloth. The fibre movement, and therefore the tonal variation in the watermark, is governed by the drainage rate and that is dependent on the profile of the embossing. This enables excellent control in the gradation of the watermark pattern, producing a subtle tonal range that is unique to the cylinder mould-made watermark process.

An alternative process for generating uniform light tonal regions (and providing enhanced watermark security) is the electrotype process. In the electrotype process a thin piece of metal, generally in the form of an image or letter, is applied to the wire cloth of the cylinder mould cover, by sewing or welding, creating a significant decrease in drainage and fibre deposition and thereby forming a light watermark in the paper. An electrotype watermark may be lighter than a watermark generated, and produced, by conventional embossing. This electrotyping process is known in papermaking and has been described in US-B-1901049 and US-B-2009185.

An electrotype watermark is therefore an area of paper having just a uniform decrease in paper thickness. The area is typically quite small and the change in paper thickness quite distinct so as to create a very light image, usually lighter than areas within a pictorial watermark.

Such an effect can be partly mimicked by the counterfeiter by using "transparentising" resins, UV lacquers applied locally or even cooking oil. However, there is a significant problem arising from the use of large thinner areas both in respect of weakening the paper and its poor security.

The advantage of watermarks is that whilst they conventionally provide a security feature visible in transmitted light, they can also be used to provide a latent security feature visible in reflected lighted when a compressible photonic crystal film is pressed onto the watermark region. Counterfeiters attempt to mimic watermarks by printing with variable density inks or by using transparentising resins, UV lacquers applied locally or cooking oil. However this only replicates the effect in transmitted light and will not replicate the effect observed when combined with a compressible photonic crystal film, and therefore the use of a watermark with a piezochromic material region provides further potential protection for a secure document comprising a watermark.

In the case of the use of a watermark, as for other relief structures the light may comprise visible and/or non-visible light, therefore including for example ultraviolet and infra-red light. Broad or narrow wavelength bands may be used. Likewise, the photonic crystal may be arranged to selectively reflect light in the non-visible part of the spectrum (including ultra-violet and infra-red).

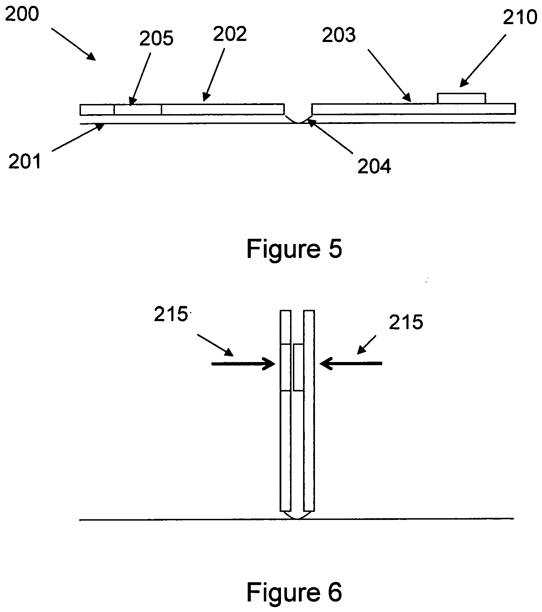

A second example document is now described in association with Figures 5 and 6. In this case the security document is a booklet in the form of a passport 200. This is illustrated in Figure 5 where the passport is shown in an open configuration, partly in section. The passport 200 has an outer cover 201 and internal pages 202,203 formed from a paper material. The pages are separated by a foldable region in the form a hinge 204. One of a number of known methods used in bookbinding may be used to produce the hinge 204. A watermark 205 is located within the structure of the paper of page 202, this watermark being formed by one of the methods described above and containing at least one region of reduced or modulated thickness. The watermark 205 operates in the conventional manner in that it provides a security feature in respect of light transmitted through the watermark. On page 203, a photonic crystal security device 210 is provided, this containing a photonic crystal which is positioned such that when the hinge 204 is operated so as to bring the surfaces of the pages 202 and 203 together, the surface of the photonic crystal security device contacts the watermark. This is illustrated in Figure 6 where the page positions represent a partially closed configuration since the cover 201 of the passport remains open. When a user applies a compressive stress as indicated by the arrows 215 (using their fingers or by compressing the pages between two rigid flat objects), the local density and/or thickness variations in the watermark 205 produce a corresponding deformation in the photonic crystal. This results in any image present within the watermark being represented as an optical effect in the photonic crystal of the device 210.

In the present case the photonic crystal film comprises carbon nanoparticles which enhance resonant scattering events that occur within the photonic crystal giving rise to strong structural colours and removes the requirement for an absorbing layer. The photonic crystal in this case is arranged to relax over a period of 1-2 minutes, thus allowing time for the passport pages 202,203 to be returned to the open position indicated in Figure 5. A person examining the document then has plenty of time to view the watermark 205 on page 202 in transmission (for example by viewing a light source through the watermark). In addition the photonic crystal security device 210 can be inspected for the existence of a reversed (mirrored) image of the watermark image.

Note that with the use of a watermark the local thickness of the paper may be less than that of the surrounding paper forming the page 202. Taking this to the extreme the watermark may be replaced with a perforation, i.e. a region of zero thickness. The perforations can be introduced into the paper during the papermaking process by preventing fibre deposition in localised areas by blinding or sealing the cylinder mould cover. Alternatively a paper or polymer substrate can be perforated in a subsequent secondary process, for example by laser cutting or mechanical punching.

In a further example, the photonic crystal may be embedded within the paper of the page 203 such that it does not project above the plane defined by the page surface. It may of course also be arranged to lie below such a plane.

The use of a watermark as a contact structure, coupled with the use of a photonic crystal security device, provides a significant additional security feature for use in security documents.

Alternatively the distortion in the piezochromic material in any of the examples may be permanent and this would be particularly useful in security devices which only need to be validated once for example as a tamper evident security device.

It will be appreciated that each of the arrangements discussed herein provide a self-authenticating function upon the security document and also significant technological hurdle to overcome for prospective counterfeiters.

## Claims

1. A security document (100) comprising:-
a security device attached to a first part of the document, the security device comprising a region of piezochromic material (110); and,
a contact structure (105) attached to a second part of the document, different from the first part, the contact structure exhibiting relief;
wherein the security document is adapted to allow the security device to be pressed against the contact structure; and, chracterised in that the piezochromic material is arranged such that, when the security device and contact structure are pressed together, an optical effect is generated within the piezochromic material and wherein the optical effect is representative of the said relief of the contact structure.

2. A security document according to claim 1, wherein the relief comprises a region which is raised or textured.

3. A security document according to claim 1 or claim 2, wherein the relief is arranged as an image and wherein the optical effect reproduces the image.

4. A security document according to any of the preceding claims, wherein at least part (204) of the document is flexible so as to allow the first and second parts to be brought together.

5. A security document according to any of the preceding claims, wherein the document is arranged such that the pressing together of the piezochromic material and the contact structure causes temporary or permanent deformation within the structure of the piezochromic material.

6. A security document according to any of the preceding claims, further comprising an absorbing layer (112) mounted to the region of piezochromic material.

7. A security document according to any of the preceding claims, wherein the contact structure comprises an absorbing phase.

8. A security document according to any of the preceding claims, wherein the security document further comprises a printed ink layer having a colour which is substantially the same as at least one of: the colour of the contact structure (105), the colour of light reflected from the piezochromic material (110) when in a stressed state or the colour of light reflected from the piezochromic material (110) when in an unstressed state.

9. A security document according to any of the preceding claims, wherein a first part of a composite image is represented in a first of a plurality of relief structures and wherein a second part of a composite image is represented in a second of a plurality of relief structures, such that the first and second images form a resultant composite image when combined.

10. A security document according to any of the preceding claims, wherein the piezochromic material is a photonic crystal.

11. A security document according to any of the preceding claims, wherein the piezochromic material is located within the document and has a first face on a first side of the document and a second face on an opposing side of the document.

12. A security document according to any of the preceding claims, wherein the piezochromic material is mounted to a window (106) in the document.

13. A security document according to any of the preceding claims, wherein the piezochromic material is formed as a film.

14. A security document according to any of the preceding claims, wherein, the piezochromic material is formed as a pigmented coating or a printed layer.

15. A security document according to any of the preceding claims, wherein the contact structure is one or more of: a printed structure, an embossed structure or a watermark (205).

## Patentansprüche

1. Sicherheitsdokument (100), das Folgendes umfasst:
eine an einem ersten Teil des Dokuments befestigte Sicherheitsvorrichtung, wobei die Sicherheitsvorrichtung einen Bereich piezochromen Materials (110) umfasst; und
eine an einem vom ersten Teil verschiedenen zweiten Teil befestigte Kontaktstruktur (105), wobei die Kontaktstruktur ein Relief aufweist;
wobei das Sicherheitsdokument dazu angepasst ist, zuzulassen, dass die Sicherheitsvorrichtung an die Kontaktstruktur gepresst wird; und
**dadurch gekennzeichnet, dass** das piezochrome Material derart angeordnet ist, dass, wenn die Sicherheitsvorrichtung und die Kontaktstruktur aneinander gepresst werden, ein optischer Effekt in dem piezochromen Material erzeugt wird, und wobei der optische Effekt das Relief der Kontaktstruktur repräsentiert.

2. Sicherheitsdokument nach Anspruch 1, wobei das Relief einen Bereich umfasst, der erhöht oder strukturiert ist.

3. Sicherheitsdokument nach Anspruch 1 oder Anspruch 2, wobei das Relief als ein Bild angeordnet ist und wobei der optische Effekt das Bild reproduziert.

4. Sicherheitsdokument nach einem der vorangehenden Ansprüche, wobei mindestens ein Teil (204) des Dokuments biegsam ist, um zu ermöglichen, dass der erste Teil und der zweite Teil zusammengeführt werden.

5. Sicherheitsdokument nach einem der vorangehenden Ansprüche, wobei das Dokument derart angeordnet ist, dass das Aneinanderpressen des piezochromen Materials und der Kontaktstruktur eine vorübergehende oder dauerhafte Verformung in der Struktur des piezochromen Materials bewirkt.

6. Sicherheitsdokument nach einem der vorangehenden Ansprüche, weiter umfassend eine Absorptionsschicht (112), die an der Region piezochromen Materials angebracht ist.

7. Sicherheitsdokument nach einem der vorangehenden Ansprüche, wobei die Kontaktstruktur eine Absorptionsphase umfasst.

8. Sicherheitsdokument nah einem der vorangehenden Ansprüche, wobei das Sicherheitsdokument weiter eine gedruckte Tintenschicht umfasst, die eine Farbe aufweist, die im Wesentlichen gleich mindestens einer der Folgenden ist: der Farbe der Kontaktstruktur (105), der Farbe des von dem piezochromen Material (110) reflektierten Lichts, wenn es sich in einem beanspruchten Zustand befindet, oder der Farbe des von dem piezochromen Material (110) reflektierten Lichts, wenn es sich in einem unbeanspruchten Zustand befindet.

9. Sicherheitsdokument nach einem der vorangehenden Ansprüche, wobei ein erster Teil eines zusammengesetzten Bilds in einer ersten einer Vielzahl von Reliefstrukturen repräsentiert wird, und wobei ein zweiter Teil eines zusammengesetzten Bilds in einer zweiten einer Vielzahl von Reliefstrukturen repräsentiert wird, sodass das erste und das zweite Bild ein resultierendes zusammengesetztes Bild bilden, wenn sie kombiniert werden.

10. Sicherheitsdokument nach einem der vorangehenden Ansprüche, wobei es sich bei dem piezochromen Material um einen photonischen Kristall handelt.

11. Sicherheitsdokument nach einem der vorangehenden Ansprüche, wobei sich das piezochrome Material innerhalb des Dokuments befindet und eine erste Oberfläche auf einer ersten Seite des Dokuments und eine zweite Oberfläche auf einer gegenüberliegenden Seite des Dokuments aufweist.

12. Sicherheitsdokument nach einem der vorangehenden Ansprüche, wobei das piezochrome Material an einem Fenster (106) in dem Dokument angebracht ist.

13. Sicherheitsdokument nach einem der vorangehenden Ansprüche, wobei das piezochrome Material als eine Folie ausgebildet ist.

14. Sicherheitsdokument nach einem der vorangehenden Ansprüche, wobei das piezochrome Material als eine pigmentierte Beschichtung oder eine gedruckte Schicht ausgebildet ist.

15. Sicherheitsdokument nach einem der vorangehenden Ansprüche, wobei es sich bei der Kontaktstruktur um eines oder mehrere der Folgenden handelt. eine gedruckte Struktur, eine geprägte Struktur oder ein Wasserzeichen (205).

## Revendications

1. Document de sécurité (100) comportant :
un dispositif de sécurité fixé sur une première partie du document, le dispositif de sécurité comportant une région de matière piézochromique (110) ; et,
une structure de contact (105) fixée sur une seconde partie du document, différente de la première partie, la structure de contact présentant un relief ;
dans lequel le document de sécurité est conçu pour permettre au document de sécurité d'être pressé contre la structure de contact ; et,
**caractérisé en ce que**
la matière piézochromique est agencée de telle sorte que, lorsque le dispositif de sécurité et la structure de contact sont pressés l'un contre l'autre, un effet optique est généré à l'intérieur de la matière piézochromique et **en ce que** l'effet optique est représentatif dudit relief de la structure de contact.

2. Document de sécurité selon la revendication 1, dans lequel le relief comporte une région qui est surélevée ou texturée.

3. Document de sécurité selon la revendication 1 ou la revendication 2, dans lequel le relief est agencé en une image et dans lequel l'effet optique reproduit l'image.

4. Document de sécurité selon l'une quelconque des revendications précédentes, dans lequel au moins une partie (204) du document est souple de façon à permettre aux première et seconde parties d'être rassemblées.

5. Document de sécurité selon l'une quelconque des revendications précédentes, dans lequel le document est agencé de sorte que la pression l'un contre l'autre de la matière piézochromique et la structure de contact provoque une déformation temporaire ou permanente à l'intérieur de la structure de la matière piézochromique.

6. Document de sécurité selon l'une quelconque des revendications précédentes, comportant en outre une couche absorbante (112) montée sur la région de matière piézochromique.

7. Document de sécurité selon l'une quelconque des revendications précédentes, dans lequel la structure de contact comporte une phase absorbante.

8. Document de sécurité selon l'une quelconque des revendications précédentes, dans lequel le document de sécurité comporte en outre une couche d'encre imprimée ayant une couleur qui est sensiblement la même qu'au moins une des couleurs suivantes : la couleur de la structure de contact (105), la couleur de la lumière réfléchie depuis la matière piézochromique (110) lorsque celle-ci est dans un état contraint ou la couleur de la lumière réfléchie depuis la matière piézochromique (110) lorsque celle-ci est dans un état non contraint.

9. Document de sécurité selon l'une quelconque des revendications précédentes, dans lequel une première partie d'une image composite est représentée dans une première structure en relief d'une pluralité de celles-ci et dans lequel une seconde partie d'une image composite est représentée dans une seconde structure en relief d'une pluralité de celles-ci, de telle sorte que les première et seconde images forment une image composite résultante lorsqu'elles sont combinées.

10. Document de sécurité selon l'une quelconque des revendications précédentes, dans lequel la matière piézochromique est un cristal photonique.

11. Document de sécurité selon l'une quelconque des revendications précédentes, dans lequel la matière piézochromique est située à l'intérieur du document et a une première face sur un premier côté du document et une seconde face sur un côté opposé du document.

12. Document de sécurité selon l'une quelconque des revendications précédentes, dans lequel la matière piézochromique est montée sur une fenêtre (106) dans le document.

13. Document de sécurité selon l'une quelconque des revendications précédentes, dans lequel la matière piézochromique est formée en une pellicule.

14. Document de sécurité selon l'une quelconque des revendications précédentes, dans lequel, la matière piézochromique est formée en un revêtement pigmenté ou une couche imprimée.

15. Document de sécurité selon l'une quelconque des revendications précédentes, dans lequel la structure de contact est un ou plusieurs des éléments suivants : une structure imprimée, une structure gaufrée ou un filigrane (205).
